# EUROPÄISCHE PATENTSCHRIFT

(11) **EP 2 487 079 B1**
(45) Veröffentlichungstag und Bekanntmachung des Hinweises auf die Patenterteilung: **25.05.2016**
(21) Anmeldenummer: 12000455.1
(22) Anmeldetag: 26.01.2012
(51) Int. Cl.: B60T 8/1755

(54) **Verfahren zum Betreiben eines Kraftfahrzeugs bei Durchfahren einer Kurve**
Method for operating a motor vehicle when driving round a bend
Procédé de fonctionnement d'un véhicule automobile lors du passage d'un virage

(30) Priorität: 11.02.2011 DE 102011010993
(43) Veröffentlichungstag der Anmeldung: 15.08.2012
(73) Patentinhaber: Audi AG, 85045 Ingolstadt (DE)
(72) Erfinder: Schwarz, Ralf, 85049 Ingolstadt (DE); Wöhler, Andreas, 85049 Ingolstadt (DE); Stemmer, Martin, 85445 Niederding (DE)

(56) Entgegenhaltungen:
- EP-A2- 1 522 475
- DE-A1- 19 607 185
- DE-A1- 19 964 032
- DE-A1-102005 053 116
- DE-A1-102009 026 813

## Beschreibung

Die Erfindung betrifft ein Verfahren zum Betreiben eines Kraftfahrzeugs bei einem Durchfahren einer Kurve. Bei dem Verfahren wird auf das Eintreten eines Lastwechsels geprüft. Als Lastwechsel wird bezeichnet, wenn der Fahrzeugführer schnell das Gaspedal zurücknimmt, "vom Gas geht", wenn also von einem Zugbetrieb in einen Schubbetrieb übergegangen wird. Bei dem erfindungsgemäßen Verfahren wird bei bzw. durch das Eintreten des Lastwechsels ein zusätzliches Bremsen an zumindest einem Rad ausgelöst. Dies ist aus der DE 196 07 185 A1 bekannt. Ziel ist es hierbei, die Fahrt des Fahrzeugs zu stabilisieren, indem durch das zusätzliche Bremsen das ohne das zusätzliche Bremsen gegebene Giermoment durch ein Gegengiermoment genau ausgeglichen wird. Die Fahrt des Kraftfahrzeugs ist somit gemäß der DE 196 07 185 A1 im Wesentlichen giermomentenlos.

Auch aus der DE 10 2008 009 153 A1 ist es bekannt, bei einem Lastwechsel für ein zusätzliches Bremsen zu sorgen, um eine das Fahrzeug stabilisierende Korrekturmaßname hervorzurufen. Zu diesem Zweck wird die Aktivierungsschwelle des elektronischen Stabilitätsprogramms (ESP) abgesenkt.

Im Stand der Technik wird die bei einem Lastwechsel auftretende Gierrate als überhöht empfunden. Dies liegt daran, dass beim Wechsel vom Zugbetrieb in einen Schubbetrieb das Schleppmoment des Motors wirksam wird, das herkömmlicherweise relativ hoch war. Grund hierfür ist die Reibung in dem Motor.

Dadurch, dass in den letzten Jahren zunehmend reibungsärmere Verbrennungskraftmaschinen gebaut wurden - auch zum Zwecke der Reduzierung des Kohlendioxidausstoßes -, ist die Höhe des Schleppmoments zunehmend abgesunken. Auch aus Gründen einer guten Akustik der Verbrennungskraftmaschine wird dafür gesorgt, dass das Schleppmoment nicht unmittelbar einsetzt, sondern mit einem Gradienten aufgebaut wird.

Fahrzeugführer sind jedoch an das Vorhandensein eines einigermaßen großen Schleppmomentes der Verbrennungskraftmaschine gewohnt und setzen dieses bei der Fahrzeugsteuerung gelegentlich bewusst ein. Das entstehende Giermoment schiebt dabei beim so genannten Eindrehen das Fahrzeug in die Kurve. Dieser Effekt der Gierratenerhöhung ist daher erwünscht, damit sich das Fahrzeug agil fahren lässt, insbesondere durch Fahrzeugführer mit sportlicher Fahrweise.

Der vordringliche Wunsch, Verbrennungskraftmaschinen reibungsärmer auszubauen und damit weniger Kraftstoff zu verbrauchen, steht im Gegensatz zu diesem Wunsch des Fahrers.

Das Dokument DE 10 2005 053 116 A1 beschreibt ein Verfahren zum Stabilisieren eines Fahrzeugs in einer fahrdynamischen Grenzsituation. Zur Steigerung des Potentials der Vorderräder des Fahrzeugs zur Aufnahme von zusätzlichen Seitenkräften wird ein Stellglied des Fahrzeugs sprungartig betätigt, um das Fahrzeug zu verzögern und so eine dynamische Lastverteilung von den Hinterrädern auf die Vorderräder zu bewirken.

Das Dokument DE 10 2009 026 813 A1 beschreibt ein Verfahren zur Erzeugung eines Differenzmomentes in einem Fahrzeug für den Fall, dass sich das Fahrzeug in einem Lastwechselzustand und zugleich in einer fahrdynamischen Grenzsituation befindet, in welcher unterschiedlich hohe Radmomente an den Fahrzeugrädern anliegen.

Durch das Verfahren wird die Momentenverteilung zwischen den Fahrzeugrädern geändert, um einem Über- oder Untersteuern vorzubeugen.

Die Aufgabe der vorliegenden Erfindung besteht darin, diesen Zielkonflikt aufzulösen bzw. beide Wünsche soweit als möglich zu erfüllen.

Die Aufgabe wird durch ein Verfahren mit den Merkmalen gemäß Patentanspruch 1 gelöst. In einem Aspekt der Erfindung wird ein Kraftfahrzeug mit den Merkmalen gemäß Patentanspruch 7 bereitgestellt.

Erfindungsgemäß wird somit bei Eintreten eines Lastwechsels ein zusätzliches Bremsen an zumindest einem Rad ausgelöst, durch dass die ohne das zusätzliche Bremsen gegebene Gierrate erhöht wird.

Diese nach herkömmlicher Denkungsart widersinnige Maßnahme, die Gierrate und das Giermoment zu erhöhen, wird durch die Erfindung ganz bewusst getroffen: Der Fahrzeugführer hat dadurch, dass das zusätzliche Bremsmoment eine Verringerung des Schleppmoments gegenüber vormaligen Motoren ausgleicht, dasselbe Fahrgefühl wie mit diesen vormaligen Motoren. Dennoch können die jetzigen Motoren das geringere Schleppmoment haben.

Das Bremsmoment ist kleiner, wenn die Fahrzeuggeschwindigkeit größer ist, es gibt also zumindest ein Bremsmoment bei einer ersten Fahrzeuggeschwindigkeit, das kleiner ist als das Bremsmoment bei einer zweiten Fahrzeuggeschwindigkeit, welche größer ist als die erste Fahrzeuggeschwindigkeit. Insbesondere kann das Bremsmoment desto kleiner sein, je größer die Fahrzeuggeschwindigkeit ist. Auf diese Weise wird vermieden, dass durch die zusätzliche Gierrate eine Instabilität des Kraftfahrzeugs in Kauf genommen werden muss.

Bei einer bevorzugten Ausführungsform der Erfindung wird das Eintreten eines Lastwechsels an vorbestimmten Messwerten und/oder einer vorbestimmten Änderung von Messwerten (zu vorbestimmten Messgrößen) erkannt. Es wird also entweder ein Schwellwertkriterium bezüglich der Messwerte oder bezüglich der Änderung angesetzt, oder eine ähnliche Maßnahme getroffen, in Abhängigkeit von Messwerten oder ihre Änderung das Eintreten einer vorbestimmten Bedingung zu prüfen, die für das Gegebensein eines Lastwechsels spricht. Solche Messwerte werden im Kraftfahrzeug in der Regel ohnehin durch geeignete Sensorik gewonnen und können in einem Steuergerät, beispielsweise für das elektronische Stabilitätsprogramm, das für die radindividuelle Ansteuerung der Bremsen verantwortlich ist, mit nur geringem Aufwand verarbeitet werden.

Besonders geeignet sind Messwerte zu den Messgrößen Stellung einer Fahrbetätigungseinrichtung (wie Fahrpedal bzw. Gaspedal), das Motormoment, der Auslenkwinkel an einer Lenkhandhabe (Lenkradwinkel) und/oder die Querbeschleunigung des Kraftfahrzeugs.

Bei einer weiteren bevorzugten Ausführungsform der Erfindung wird das bei dem zusätzlichen Bremsen an zumindest einem Rad aufgebrachte Bremsmoment in Abhängigkeit von Messwerten zu zumindest einer vorbestimmten Größe festgelegt, wobei die Messgröße vorzugsweise die Fahrzeuglängsgeschwindigkeit und/oder die Fahrzeugquerbeschleunigung und/oder einen Kurvenradius der gefahrenen Kurve umfasst. Naturgemäß wäre es auch möglich, dass das Ausmaß des Bremsmoments in Abhängigkeit von einer Fahrzeugquergeschwindigkeit oder einer Fahrzeuglängsbeschleunigung festgelegt wird.

Legt man das Bremsmoment situationsabhängig fest, so kann der Fahrkomfort für den insbesondere sportlich fahrenden Fahrzeugführer geeignet mit Sicherheitserfordernissen abgeglichen werden.

Bei einer bevorzugten Ausführungsform der Erfindung werden nur kurveninnere Räder gebremst. Dies gilt insbesondere dann, wenn die für das elektronische Stabilitätsprogramm ohnehin vorhandene Bremseinrichtung zum radindividuellen Bremsen genutzt werden kann und genutzt wird. Bei Bremsen nur der kurveninneren Räder bewirkt die gleiche Verzögerung eine doppelt so hohe Beeinflussung der Gierrate.

Alternativ hierzu ist es möglich, mithilfe einer elektrischen Maschine zu bremsen, indem diese als Generator arbeitet. Solche elektrischen Maschinen sind häufig ohnehin vorhanden, z. B. im Rahmen eines Hybridkonzepts, und sie arbeiten als Generator, um Bewegungsenergie beim Bremsen zu rekuperieren. Typischerweise arbeiten diese elektrischen Maschinen dann auf zwei Räder an einer selben Achse.

Das erfindungsgemäße Kraftfahrzeug weist zumindest einen (von einer Bedienperson) wählbaren Betriebsmodus auf, in dem das Verfahren nach Anspruch 1 bei einer Kurvefahrt vollführt wird und insbesondere zumindest einen weiteren Betriebsmodus, in dem es gar nicht vollführt wird.

Bei dem erfindungsgemäßen Kraftfahrzeug kann der Fahrzeugführer daher selbsttätig festlegen, ob er zum Zwecke einer sportlichen Fahrweise eine Giermomenten- oder Gierratenerhöhung bei einer Kurvenfahrt wünscht, oder ob auf diese verzichtet werden kann. Es sind daher bei ein und demselben Kraftfahrzeug unterschiedliche Fahrstile ermöglicht.

Nachfolgend wird eine bevorzugte Ausführungsform der Erfindung unter Bezug auf die Zeichnung näher beschrieben, in der
- Fig. 1: anhand eines Einspurmodells die bei einer Vorwärtsbeschleunigung wirkenden Kräfte und Momente veranschaulicht,
- Fig. 2: bei dem Modell aus Fig. 1 die bei einer Verzögerung des Kraftfahrzeugs herkömmlicherweise wirkenden Kräfte und Momente veranschaulicht, und
- Fig. 3: die bei einer Verzögerung des Kraftfahrzeugs aus Fig. 1 erfindungsgemäß wirkenden Kräfte und Momente veranschaulicht, und

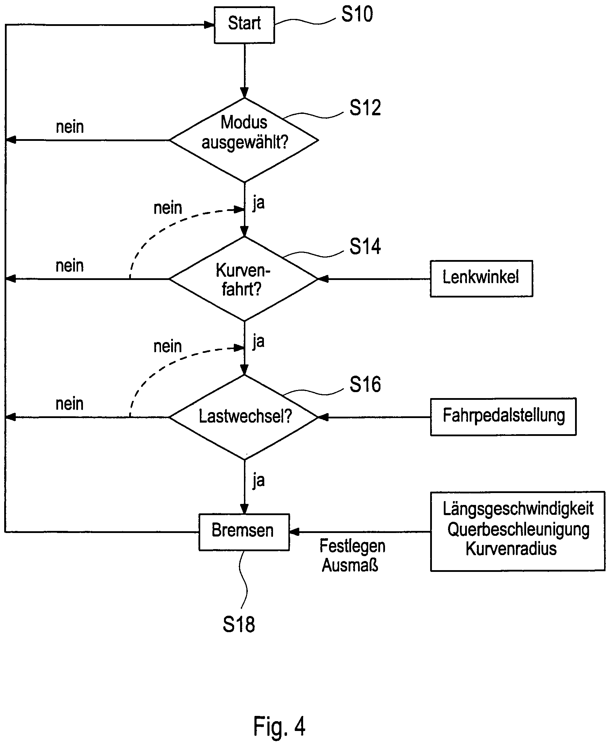

- Fig. 4: ein Flussschaubild zur Erläuterung des erfindungsgemäßen Verfahrens ist.

In einem Einspurmodell werden die Räder einer Achse in der Fahrzeugmitte zusammengefasst. Zu sehen ist daher ein Vorderrad, an das die mit VA bezeichneten Kräfte angreifen, und ein Hinterrad, an das die mit HA wirkenden Kräfte angreifen. Im Fahrzeugschwerpunkt SP wirkt das Giermoment M_{Z}.

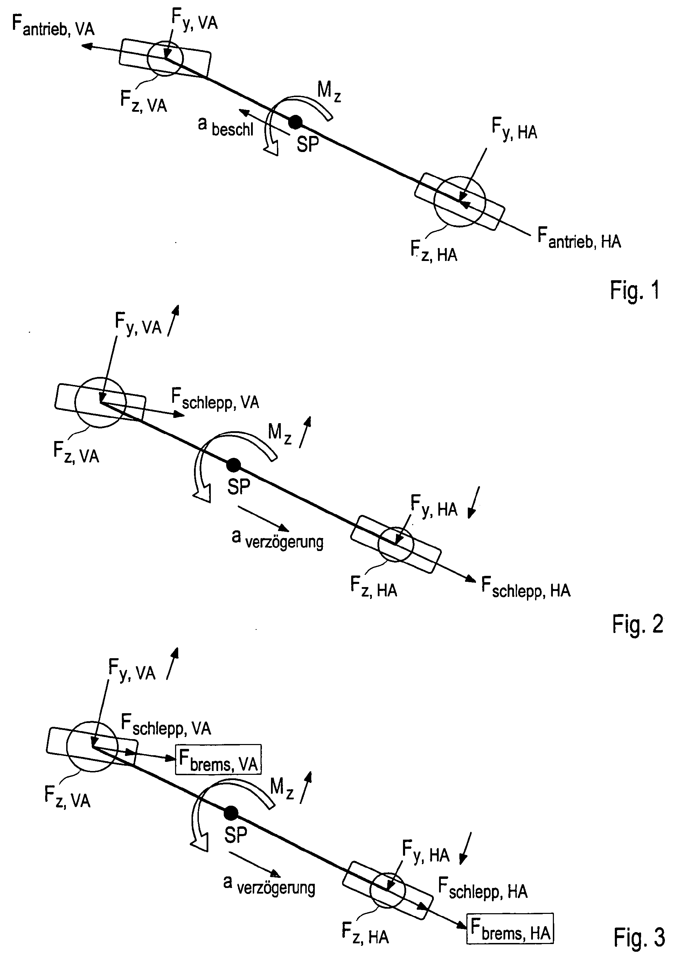

Bei einer Vorwärtsbeschleunigung wirkt gemäß Fig. 1 die Kraft F_{antrieb,VA} auf die Vorderräder, die Kraft F_{antrieb,HA} auf die Hinterräder. Bei der Vorwärtsbeschleunigung a_{beschl} kippt das Fahrzeug leicht nach hinten, so dass die durch Kreise dargestellten Aufstandskräfte (längs der Fahrzeughochachse nach unten wirkenden Kräfte) hinten größer sind als vorne, siehe den mit F_{z,HA} bezeichneten Kreis hinten und den mit F_{z,VA} bezeichneten Kreis vorn. Mit den Aufstandskräften steigt auch die Aufstandsfläche (der Betrag der Kraft ist proportional zum Kreisdurchmesser), und daher können bei Vorwärtsbeschleunigung a_{beschl} auch größere Seitenkräfte F_{y,HA} auf die Hinterräder wirken als auf die Vorderräder, siehe dort die Seitenkräfte F_{y,VA}.

Bei einem Lastwechsel wird abrupt von a_{beschl} zu einer Verzögerung a_{verzöge-rung} übergegangen. Anstelle der Antriebskraft wirkt nun ein Schleppmoment des Motors F_{schlepp,VA} auf die Vorderräder, F_{schlepp,HA} auf die Hinterräder. Da das Kraftfahrzeug nunmehr nach vorne kippt (nickt) sind die Größen F_{z,VA} und F_{y,VA} nunmehr größer als zuvor, die Größen F_{z,HA} und F_{y,HA} kleiner als zuvor. Es ändern sich somit die Seitenkräfte, und zwar dergestalt, dass sich das Giermoment M_{Z} erhöht.

Dies ist ein Fahrzeugführer in der Regel von einem Kraftfahrzeug gewohnt: Geht er vom Fahrpedal (Gaspedal) herunter, tritt ein Lastwechsel ein, die Gierrate erhöht sich wegen des höheren Giermoments, und das Fahrzeug dreht stärker in die Kurve ein als zuvor. Diesen Effekt nutzen Fahrzeugführer bewusst.

Bei moderneren Fahrzeugen ist das Schleppmoment jedoch geringer, V_{schlepp,VA} also kleiner, siehe Fig. 3 im Vergleich zu Fig. 2. Vorliegend wird nun zusätzlich eine Bremskraft F_{brems,VA} auf die Vorderräder, und eine zusätzliche Bremskraft F_{brems,HA} auf die Hinterräder ausgeübt. Diese Bremskräfte gleichen aus, dass das Schleppmoment geringer ist als in früheren Zeiten. Man erreicht somit durch das zusätzliche Bremsen denselben Effekt des erhöhten Giermoments und daher auch der Gierratenerhöhung bei einem Lastwechsel.

Das erfindungsgemäße Verfahren beginnt mit dem Start des Kraftfahrzeugs in Schritt S10. Ein Fahrzeugführer kann an einem geeigneten Bedienhebel, einer Bedientaste oder einem sonstigen Betätigungselement auswählen, ob er einen eher sportlichen Fahrmodus haben möchte oder einen Komfortmodus. In Schritt S12 wird geprüft, ob ein bestimmter Modus, nämlich der sportliche Modus ausgewählt ist. Solange dies nicht der Fall ist, geht das Verfahren nicht weiter. Ist der sportliche Modus ausgewählt, wird zum Schritt S14 übergegangen, und es wird darauf geprüft, ob das Fahrzeug eine Kurve durchfährt oder in eine Kurve einfährt. Dies kann anhand des Lenkwinkels ermittelt werden, sei dies der Lenkwinkel an den Rädern oder ein an einer Lenkhandhabe eingestellter Lenk(rad)winkel. Solange keine Kurve durchfahren wird, geht das Verfahren nicht weiter und entweder wieder zum Schritt S10, zum Schritt S12 oder zum Schritt S14 zurück.

Bei einer Kurvenfahrt wird nun in Schritt S16 daraufhin geprüft, ob ein Last-wechsel erfolgt. Dies kann anhand einer Fahrpedalstellung festgestellt werden: Ist das Fahrpedal heruntergetreten, herrscht Zugbetrieb vor, und ist das Fahrpedal nicht mehr heruntergetreten, wird in den Schubbetrieb übergegangen. Man kann dies auch an einer Änderung in der Fahrpedalstellung feststellen.

Solange kein Lastwechsel erfolgt, wird wieder zum Start S10, zum Schritt S12, zum Schritt S14 oder ggf. nochmals zum Schritt S16 übergegangen. Sobald ein Lastwechsel erfasst wird, wird nun in Schritt S18 gebremst, näm-lich die eben anhand der Fig. 3 erläuterte zusätzliche Bremskraft F_{brems,VA} und/oder F_{brems,HA} aufgebracht. Das Ausmaß dieser Bremskraft bzw. des zugehörigen Bremsmoments kann in Abhängigkeit von der Längsgeschwindigkeit des Kraftfahrzeugs festgelegt werden, von seiner Querbeschleunigung oder vom Kurvenradius der Kurve, die das Fahrzeug fährt. Kennzeichnend für das vorliegende Verfahren ist es, dass das Bremsmoment in dieselbe Richtung wirkt wie das Schleppmoment.

Im Ergebnis erhält man somit bei Auswahl des bestimmten Modus in einer Kurvenfahrt bei einem Lastwechsel, dass durch zusätzliches Bremsen das Giermoment und damit die Gierrate erhöht wird, so dass der den Modus ausgewählt habende Fahrzeugführer dasselbe Fahrgefühl hat wie bei früheren Kraftfahrzeugen mit hohem Schleppmoment des Motors.

## Patentansprüche

1. Verfahren zum Betreiben eines Kraftfahrzeugs bei einem Durchfahren einer Kurve, bei welchem auf das Eintreten eines Lastwechsels, bei welchem von einem Zugbetrieb in einen Schubbetrieb übergegangen wird, geprüft wird (S16) und durch dessen Eintreten ein zusätzliches Bremsen (S18) an zumindest einem Rad ausgelöst wird, durch welches die ohne das zusätzliche Bremsen gegebene Gierrate erhöht wird,
**dadurch gekennzeichnet, dass**
ein Bremsmoment kleiner ist, wenn eine Fahrzeuggeschwindigkeit größer ist.

2. Verfahren nach Anspruch 1,
**dadurch gekennzeichnet, dass**
das Eintreten eines Lastwechsels an zumindest einem vorbestimmten Messwert und/oder zumindest einer vorbestimmten Änderung von zumindest einem vorbestimmten Messwert erkannt wird.

3. Verfahren nach Anspruch 2,
**dadurch gekennzeichnet, dass**
Messwerte zu einer Messgröße aus der Gruppe Stellung einer Fahrbetätigungseinrichtung, Motormoment, Auslenkwinkel an einer Lenkhandhabe und/oder Querbeschleunigung gewonnen werden.

4. Verfahren nach einem der vorhergehenden Ansprüche,
**dadurch gekennzeichnet, dass**
das bei dem zusätzlichen Bremsen an zumindest einem Rad aufgebrachte Bremsmoment (F_{brems,VA}, F_{brems,HA}) in Abhängigkeit von Messwerten zu zumindest einer vorbestimmten Messgröße festgelegt wird, wobei die zumindest eine vorbestimmte Messgröße vorzugsweise die Fahrzeuglängsgeschwindigkeit und/oder die Fahrzeugquerbeschleunigung und/oder einen Kurvenradius umfasst.

5. Verfahren nach einem der vorhergehenden Ansprüche,
**dadurch gekennzeichnet, dass**
nur kurveninnere Räder gebremst werden.

6. Verfahren nach einem der vorhergehenden Ansprüche,
**dadurch gekennzeichnet, dass**
mithilfe einer elektrischen Maschine gebremst wird, indem diese als Generator arbeitet.

7. Kraftfahrzeug mit zumindest einem wählbaren Betriebsmodus, in dem das Verfahren nach Anspruch 1 bei einer Kurvenphase vollführt wird, und mit zumindest einem weiteren Betriebsmodus, in dem es nicht vollführt wird.

## Claims

1. Method for operating a motor vehicle when driving around a curve, in which the occurrence of a load exchange is verified (S16) when a transfer is made from a pull operation to a push operation and because of this occurrence additional braking (S18) is triggered to at least one wheel, by means of which the yaw rate provided without the additional braking is increased, **characterised in that** the braking torque is smaller when the driving speed is greater.

2. Method according to claim 1, **characterised in that** the occurrence of a load exchange is recognised from at least one predefined measurement value and/or at least one predetermined variation from at least one predefined measurement value.

3. Method according to claim 2, **characterised in that** measurement values for a measurement variable are obtained from the group: position of a drive activating device, motor torque, deflection angle of a steering handle and/or transverse acceleration.

4. Method according to any one of the preceding claims, **characterised in that** the braking torque (F_{brems,VA}, F_{brems,HA}) applied with the additional braking to at least one wheel is determined as a function of the measurement values for at least one predefined measurement variable, wherein the at least one predefined measurement variable preferably comprises the vehicle longitudinal velocity and/or the vehicle transverse acceleration and/or a radius of curvature.

5. Method according to any one of the preceding claims, **characterised in that** only the inside wheels are braked.

6. Method according to any one of the preceding claims, **characterised in that** braking is performed by means of an electrical machine, **in that** the latter operates as a generator.

7. Motor vehicle with at least one selectable operating mode in which the method according to claim 1 is performed in a curve phase and with at least one additional operating mode in which it is not performed.

## Revendications

1. Procédé de fonctionnement d'un véhicule automobile lors de la négociation d'une courbe, dans lequel, à l'arrivée d'une alternance d'effort dans laquelle on passe d'un mode de traction à un mode de poussée et par laquelle est déclenché un freinage supplémentaire (S18) sur au moins une roue, on vérifie (S16) par quoi la vitesse de lacet indiquée sans le freinage supplémentaire est augmentée,
**caractérisé en ce que** :
le couple de freinage est d'autant plus petit que la vitesse du véhicule est grande.

2. Procédé selon la revendication 1,
**caractérisé en ce que** :
l'arrivée d'une alternance d'effort est identifiée par au moins une valeur de mesure prédéterminée et/ou au moins une modification prédéterminée d'au moins une valeur de mesure prédéterminée.

3. Procédé selon la revendication 2,
**caractérisé en ce que** :
l'on obtient des valeurs de mesure sur une grandeur de mesure choisie dans le groupe de la position d'un dispositif de commande de conduite, d'un couple moteur, d'un angle de déviation sur un volant de direction et/ou d'une accélération transversale.

4. Procédé selon l'une quelconque des revendications précédentes,
**caractérisé en ce que** :
le couple de freinage (F_{frein,VA}, F_{frein,HA}) appliqué lors du freinage supplémentaire sur au moins une roue est fixé en fonction de valeurs de mesure sur au moins une grandeur de mesure prédéterminée, dans lequel la au moins une grandeur de mesure prédéterminée comprend de préférence la vitesse longitudinale du véhicule et/ou l'accélération transversale du véhicule et/ou un rayon de virage.

5. Procédé selon l'une quelconque des revendications précédentes,
**caractérisé en ce que** :
seules les roues intérieures au virage sont freinées.

6. Procédé selon l'une quelconque des revendications précédentes,
**caractérisé en ce que** :
l'on freine au moyen d'une machine électrique en faisant fonctionner celle-ci comme génératrice.

7. Véhicule automobile avec au moins un mode de traction sélectionnable, dans lequel le procédé est effectué selon la revendication 1 en phase de virage et avec au moins un autre mode de traction dans lequel il n'est pas effectué.
